# FASCICULE DE BREVET EUROPEEN

(11) **EP 0 343 062 B1**
(45) Date de publication et mention de la délivrance du brevet: **21.07.1993**
(21) Numéro de dépôt: 89401355.6
(22) Date de dépôt: 16.05.1989
(51) Int. Cl.: H04J 3/06

(54) **Procédé d'émission de données avec compression et de réception de données avec expansion sur ligne téléphonique numérisée**
Verfahren zum Senden von Daten mit Kompression und zum Empfang von Daten mit Expansion über eine digitalisierte Telefonleitung
Method of sending data with compression and of receiving data with expansion over a digitized telephone line

(30) Priorité: 16.05.1988 FR 8806896
(43) Date de publication de la demande: 23.11.1989
(73) Titulaire: SGS-THOMSON MICROELECTRONICS SA, 94250 Gentilly (FR)
(72) Inventeur: Athènes, Claude, F-75013 Paris (FR); Bernet, Jean-Louis, F-38500 La Buisse (FR); Saxod, Jean-Bernard, F-38100 Grenoble (FR)
(74) Mandataire: de Beaumont, Michel

(56) Documents cités:
- US-A- 4 058 682
- US-A- 4 368 531
- PATENT ABSTRACTS OF JAPAN, vol. 5, no. 63 (E-54)[735], 28 avril 1981, page 19 E 54 & JP-A-56 12 149

## Description

La présente invention concerne un procédé d'émission et de réception de données binaires et un circuit ou interface pour mettre en oeuvre ce procédé.

Plus particulièrement, la présente invention concerne le domaine de la téléphonie numérique et un circuit d'interface permettant à partir d'un flux de mots de données d'entrée arrivant régulièrement au rythme d'une horloge d'émettre des données regroupées par trame, chaque trame comprenant un certain nombre n de mots de données du premier flux et des mots d'accompagnement utiles à la synchronisation et à l'identification des trames. Le système doit fonctionner de sorte que l'émission des n mots de données dans le deuxième flux avec les mots d'accompagnement supplémentaires occupe la même durée que la réception de n mots de données du premier flux incident.

L'invention vise également un circuit symétrique du circuit sus-énoncé c'est-à-dire une interface recevant des trames et renvoyant un flux continu de mots de données sans les mots d'accompagnement.

Un circuit de ce type est par exemple décrit dan le brevet US-A-4058682.

Un objet de la présente invention est de prévoir un tel procédé qui soit particulièrement simple à mettre en oeuvre, qui soit réalisable sous forme de circuit intégré, et qui évite toute perte d'information une fois que les opérations initiales de synchronisation dans l'interface ont été effectuées.

Pour atteindre cet objet ainsi que d'autres, la présente invention prévoit un procédé pour convertir un premier flux de mots de données fournis au rythme d'une première horloge en un deuxième flux de données comprenant, à l'intérieur de trames successives, une séquence de n mots de données du premier flux et des données d'accompagnement, la durée de chaque trame du deuxième flux étant égale à la durée de n mots de données dans le premier flux, ce procédé comprenant les étapes suivantes :
- mémoriser des mots de données successifs du premier flux dans un registre d'entrée,
- dès que le registre est plein, écrire son contenu dans l'un de p registres intermédiaires,
- lire séquentiellement les p registres intermédiaires dans un registre de sortie, et
- si la séquence des écritures et des lectures dans les registres intermédiaires est telle qu'un registre intermédiaire est lu alors que son écriture n'a pas été modifiée ou est en cours de modification, sauter, au début de la trame suivante, un ordre d'écriture jusqu'à ce qu'on arrive à une synchronisation convenable qui sera ensuite maintenue pendant les trames ultérieures.

Ces objets, caractéristiques et avantages ainsi que d'autres de la présente invention seront exposés plus en détail dans la description suivante de modes de réalisation particuliers faite en relation avec les figures jointes parmi lesquelles :
la figure 1 illustre l'organisation de registres intermédiaires utilisés dans le circuit d'interface selon la présente invention dans le sens émission ;
la figure 2 représente très schématiquement, sous forme de blocs un circuit de synchronisation des signaux de lecture et d'écriture selon la présente invention dans le sens émission ;
la figure 3 est destinée à mieux faire comprendre le processus de synchronisation que la présente invention vise à mettre en oeuvre dans le sens émission ;
la figure 4 représente de façon un peu plus détaillée le circuit de synchronisation utilisé selon la présente invention ;
les figures 5 et 6 représentent des chronogrammes destinés à illustrer les signaux fournis par le circuit de synchronisation selon la présente invention ; et
les figures 7 et 8 représentent de façon plus détaillée des circuits destinés à fournir les signaux de comparaison dans le comparateur illustré en figures 2 et 4.

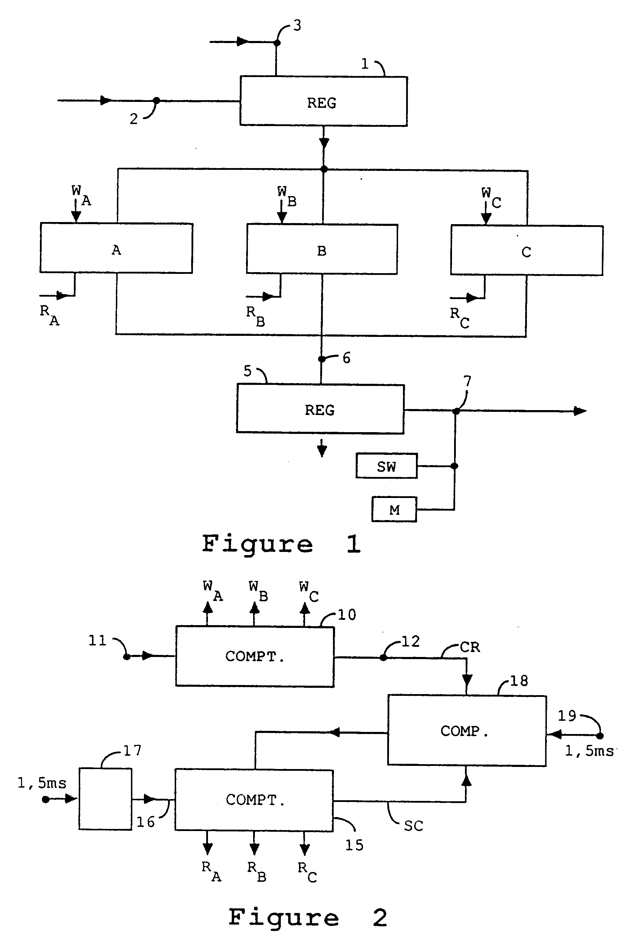

La figure 1 représente l'agencement général d'un circuit selon la présente invention. Un registre tampon 1 reçoit des données d'un flux incident de mots, ces mots arrivant en synchronisme avec une horloge de période donnée, disponible sur une borne 3 du registre.

Etant donné le flux de mots incidents, on souhaite transférer les mots dans un registre de sortie 5 comprenant une entrée parallèle 6 et une sortie série 7 pour ensuite émettre une trame comprenant une séquence d'un certain nombre de mots de données et des mots d'accompagnement désignés par les références SW et M. Une trame de sortie complète, comprenant n mots de données et deux mots d'accompagnement (SW et M) a la même durée que celle de n mots dans le flux de données incident sur la borne 2 du registre d'entrée 1. Ainsi, l'horloge de trame d'émission a une période qui est un multiple entier (n) de l'horloge de trame de réception.

Toutefois, on suppose également que les horloges d'entrée et de sortie sont asynchrones, c'est-à-dire qu'elles ont une relation de phase quelconque et qu'elles sont affectées d'une gigue, c'est-à-dire que de période à période il peut se présenter des décalages mais que ces décalages sont périodiques et en moyenne nuls.

Selon la présente invention, les mots du registre 1 sont séquentiellement envoyés dans des registres intermédiaires A, B, C au rythme d'impulsions d'écriture WA, WB, WC et lus vers le registre 5 au rythme d'impulsions de lecture RA, RB, RC.

Outre cette organisation générale, la présente invention vise plus particulièrement le mode de synchronisation entre les impulsions d'écriture et les impulsions de lecture, pour permettre notamment l'utilisation d'un nombre minimal de registres intermédiaires.

Dans ce qui suit, on supposera que l'horloge accessible sur la borne 3 a une période de 125 microsecondes (fréquence de 8 kHz), que les mots de données sont des mots de 18 bits, c'est-à-dire que 18 bits sont introduits dans le registre 1 toutes les 125 microsecondes. Les bits constituant les mots de 18 bits sont introduits dans le registre d'entrée au rythme d'une horloge bit dont les caractéristiques sont quelconques, c'est-à-dire qu'à l'intérieur d'une période de mot 18 tops d'horloge accompagnent les 18 bits du mot à des moments quelconques à l'intérieur de cette période. Ainsi cette horloge bit ne peut pas être utilisée dans le dispositif de synchronisation sinon pour décaler les bits dans le registre d'entrée.

On supposera également que l'horloge de trame de sortie a une période de 1,5 millisecondes, c'est-à-dire que les horloges de mots d'entrée et de trame de sortie sont dans le rapport de 1 à 12. Ainsi, une trame de sortie comprendra 12 mots de données successifs et les mots d'accompagnement SW et M adéquats.

La figure 2 représente sous forme de blocs et de façon très globale le circuit de synchronisation selon la présente invention qui est destiné à fournir les signaux d'écriture WA, WB, WC et de lecture RA, RB et RC des trois registres A, B, C susmentionnés.

Un compteur de réception 10 reçoit les signaux d'horloge susmentionnés à la fréquence de synchronisation des mots de réception, c'est-à-dire à une période de 125 µs, sur son entrée 11 et fournit des signaux de sortie WA, WB, WC espacés de 125 µs et dirigés vers chacun des registres A, B, C. Ce compteur fournit en outre sur une sortie 12 un signal CR en correspondance avec avec le signal d'écriture WA. Cette correspondance entre CR et WA est prise arbitrairement (on aurait pu prendre un signal en correspondance avec WB ou WC). Autrement dit, on compare la lecture et l'écriture d'un même registre et non la lecture et l'écriture du registre correspondant au premier mot de 18 bits émis au début d'une trame. Un compteur d'émission 15 reçoit sur son entrée d'horloge 16 des signaux en provenance d'un circuit diviseur 17 recevant le signal de synchronisation de trame d'émission ayant une période de 1,5 ms de sorte que l'on obtient sur la sortie 16 des signaux à la cadence de l'intervalle entre des signaux de lecture successifs RA, RB, RC à envoyer aux différents registres, comme cela sera expliqué plus en détail ci-après. La sortie du compteur d'émission 15 fournit des signaux SC associés à chaque signal RA. Les signaux CR et SC sont respectivement associés aux signaux WA et RA, comme on le verra ci-après, de sorte que, quand la synchronisation écriture/lecture est convenable, ils ne sont pas simultanément à niveau haut. L'état relatif des signaux CR et SC est détecté par un comparateur de phase 18 qui reçoit également sur une entrée 19 le signal de synchronisation de trame d'émission de 1,5 ms et qui commande le compteur d'émission 15 de façon à décaler d'un temps (c'est-à-dire sauter une fois) la lecture d'un registre RA, RB ou RC quand le comparateur de phase 18 indique que les signaux CR et SC ne sont pas dans l'état relatif souhaité, c'est-à-dire quand RC.SC = 1.

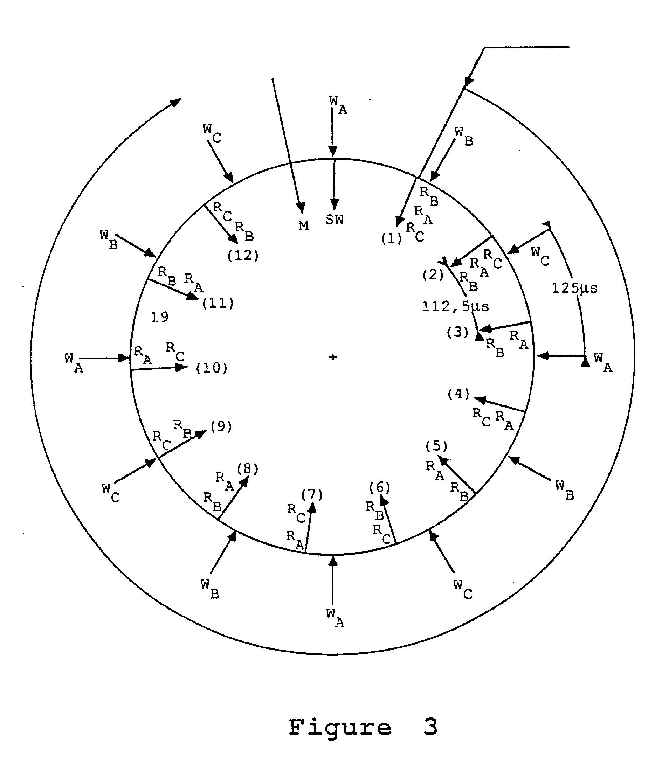

Avant d'expliquer plus en détail la façon dont le circuit de la figure 2 peut être réalisé en pratique, on va expliquer de façon imagée, en relation avec la figure 3, l'objectif de synchronisation que l'on vise à atteindre. Pour mieux faire comprendre ce problème, on donnera un exemple de valeurs numériques en gardant les exemples de valeurs numériques déjà indiquées. On se place dans le cas où l'ensemble des mots d'accompagnement M et SW correspond à 24 bits et où, comme cela a été indiqué précédemment, chacun des mots de données correspond à 18 bits. Ainsi, dans la trame d'émission, chaque mot de données correspondra à une durée de 112,5 microsecondes.

Si l'on considère le début de la première impulsion de synchronisation de trame d'émission, ou fenêtre, de durée 112,5X12 = 1350 microsecondes, à l'instant initial de cette impulsion, le compteur 15 envoie un signal de lecture, par exemple le signal RB. Ensuite, à un instant non synchronisé par rapport à l'émission du signal RB, arrive l'un des trois signaux d'écriture, WA, WB, WC, par exemple WB dans le cas représenté. On verra que cette arrivée d'un signal WB après un signal RB ne convient pas à une synchronisation convenable. 112,5 microsecondes après l'impulsion RB, arrive l'impulsion RC et 125 microsecondes après l'impulsion WB, arrive l'impulsion WC puis, de même arrivent l'impulsion RA puis l'impulsion WA. Le comparateur 18 qui a indiqué que l'on n'était pas dans la bonne condition de synchronisation envoie un signal de saut (SAUT) au compteur d'émission 15 pour lui faire sauter un coup de lecture, à savoir que l'on renvoie une deuxième fois l'impulsion de lecture, c'est-à-dire qu'on relit un registre A, B ou C. Ensuite, cycliquement, on envoie les impulsions successives RB, RC, RA... jusqu'au moment où l'on envoie les mots M et SW avant d'émettre la trame suivante. Cette trame suivante commence par un signal de lecture RA et comme on est à nouveau dans un mauvais cas de synchronisation, une impulsion de lecture est sautée une nouvelle fois. Ensuite, au cours des cycles successifs, le même ordre, commençant par l'émission d'un signal RC puis d'un signal RA, se répète à chaque trame successive.

On voit que l'on saute 0, 1 ou 2 instants de lecture, c'est-à-dire que l'on se synchronise en 0, 1,5 ou 3 ms. Le temps de convergence maximal est donc de 3 ms.

Dans ce qui précède, on a indiqué a priori que la séquence commençant par un signal RB ou par un signal RA ne convenait pas. On peut voir que la séquence commençant par un signal RB ne convient pas en regardant les références indiquées autour du cercle illustré sur la figure 3. On a numéroté de (1) à (12) les instants auxquels des impulsions de lecture (RA, RB ou RC) sont émises. Si l'on part de la position (4), un signal de lecture RA arrive peu après un signal d'écriture WA : pas de problème. De même les positions (5), (6), (7) et à la limite (8) sont satisfaisantes. Par contre, on voit, à la position (9), que l'on émet un signal de lecture RC avant que le signal d'écriture WC ait été appliqué, c'est-à-dire qu'on lira une deuxième fois à la position (9) le même mot que celui qui avait été lu quand on se trouvait à la position (6).

Par contre, si l'on considère les signaux de lecture émis successivement et indiqués du côté de la flèche interne au cercle illustré sur la figure 3, commençant par le signal RC, on voit qu'un signal de lecture suit toujours un signal d'écriture. En fait, le calcul est effectué pour que le signal à la douzième position (RB) suive un signal d'écriture (WB). D'autre part, il convient que la marge soit suffisante pour tenir compte des diverses sources d'erreurs possibles et notamment de la gigue existant entre l'horloge de réception et le signal de fenêtre (et les signaux de période 112,5 microsecondes qui en découlent).

On notera que c'est à partir de considérations telles que celles illustrées en figure 3 que l'on déterminera le nombre minimum de registres nécessaires en fonction des périodes relatives de lecture d'écriture, du nombre de mots dans une trame d'émission, et de la durée des signaux d'accompagnement dans cette trame d'émission. Dans le cadre de l'exemple numérique indiqué ci-dessus, trois registres suffisent, c'est-à-dire qu'il serait impossible d'utiliser un nombre plus petit de registres. On pourrait utiliser un nombre de registres plus élevé mais cela concourrait simplement à compliquer le système et il est souhaitable de préférer le nombre minimal possible.

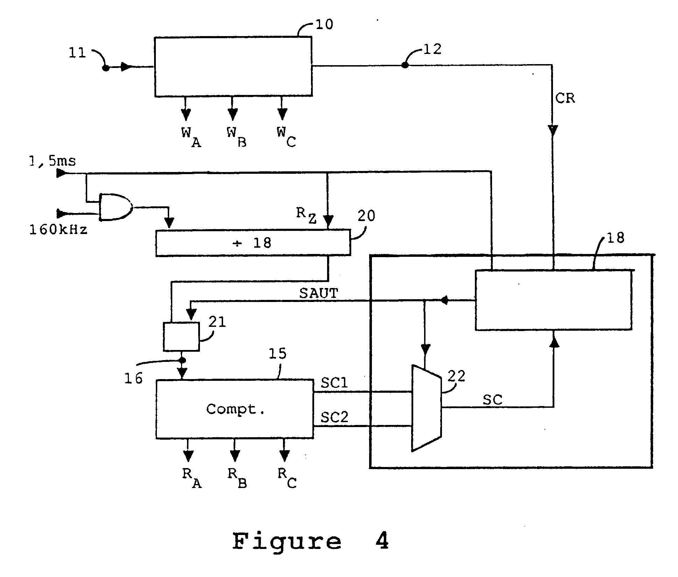

La figure 4 représente un exemple un peu plus détaillé de réalisation du circuit de la figure 2. On retrouve dans cette figure le compteur de réception 10 fournissant les signaux WA, WB et WC, recevant le signal de synchronisation sur sa borne 11 et fournissant un signal CR sur sa borne 12 en direction du comparateur 18. On retrouve également dans cette figure le compteur 15 recevant des signaux d'horloge sur une borne d'entrée 16 et fournissant un signal de sortie SC vers le comparateur 18.

Plus précisément, le signal de fenêtre de période 1,5 ms est envoyé à une entrée de validation du comparateur 18 et à une entrée de remise à zéro d'un compteur-diviseur par 18, 20, qui reçoit un signal à 160 kHz pendant la durée de la fenêtre. La sortie de ce diviseur par 18 est un signal de période 112,5 microsecondes qui est appliqué à l'entrée 16 du compteur 15 par l'intermédiaire d'une porte 21 dont la deuxième entrée reçoit la sortie du comparateur 18 pour inhiber cette porte 21 quand le comparateur 18 a déterminé que la relation de phase entre les signaux CR et SC n'est pas satisfaisante.

Selon une particularité de l'invention qui sera détaillée ci-après, le compteur 15 ne fournit pas un signal SC unique en relation avec le signal RA mais deux signaux SC1 et SC2, tous deux en relation avec le signal RA et qui sont choisis par une porte 22 en fonction de la sortie du comparateur (le signal SC1 est envoyé tant que des signaux de saut sont présents et le signal SC2 est envoyé dès qu'il n'y a plus de signaux de saut et l'inverse se produit à nouveau si des signaux de saut réapparaissent). SC1 et SC2 sont créés à partir du décodage du compteur 20 qui permet de choisir une position parmi 18 et du compteur 15 qui détermine l'instant de lecture RA.

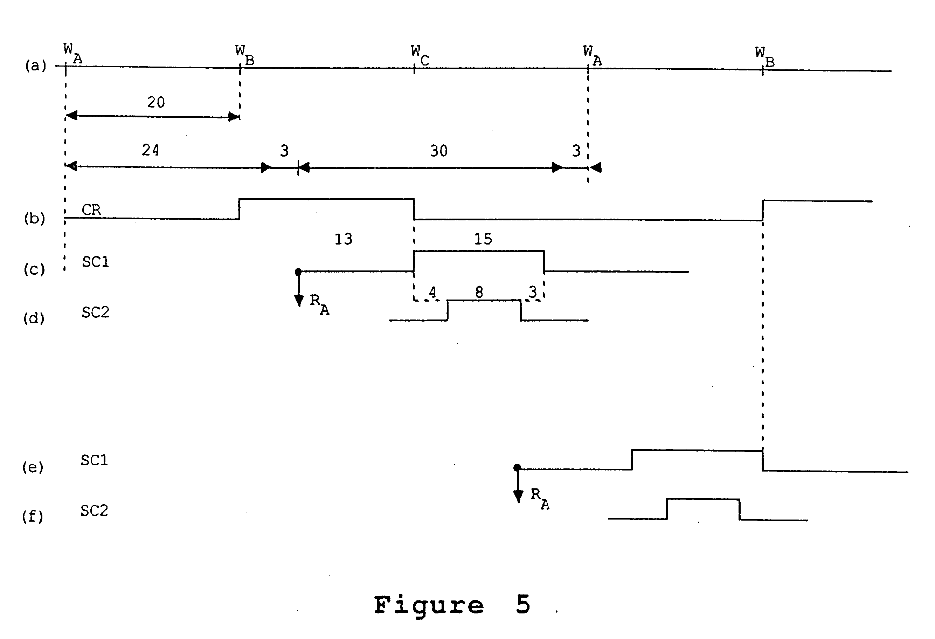

Les conditions sur la synchronisation de la fourniture des signaux RA, RB, RC par rapport aux signaux WA, WB, WC et plus particulièrement des signaux RA et WA peuvent être analysées plus en détail en relation avec les chronogrammes de la figure 5.

Sur cette figure 5, la courbe (a) indique trois instants d'arrivée des impulsions d'écriture WA, WB et WC. Avec les valeurs numériques indiquées précédemment, si l'on compte en nombre de bits de trame émission, l'intervalle entre des impulsions d'écriture successives est de 20 bits. Ainsi, le premier signal RA doit arriver par rapport au signal WA avec un retard minimum de 24 durées de bit (durée du mot d'accompagnement M + SW) + 3 durées de bit correspondant à l'amplitude de gigue maximale. D'autre part, le signal RA doit arriver trois durées de bit avant le signal WA suivant pour tenir compte de la gigue. Ainsi, on a une zone autorisée pour le premier signal RA par rapport au premier signal WA située dans une fenêtre d'une durée de 30 bits.

Il serait possible, pour chaque premier signal de lecture RA, RB ou RC incident de réaliser au moyen de circuits logiques des comparaisons et des temporisations pour vérifier que la relation convenable est obtenue par rapport au premier signal d'écriture WA, WB ou WC.

Selon un mode de réalisation de la présente invention, on préfère comparer arbitrairement l'instant d'écriture WA à l'instant de lecture RA comme cela est illustré en figure 5(b). Pour cela on produit à partir du signal du compteur 10 une sortie CR sur une borne 12 à haut niveau pendant l'intervalle WB-WC et à bas niveau pendant le reste du temps puis, à partir du compteur d'émission 15, on produit un signal SC, par exemple un signal SC1 présentant un certain décalage par rapport au signal RA pour simplifier la comparaison entre le signal SC1 et le signal CR. Ce signal SC1 peut par exemple être un signal, illustré en (c) et (e) présentant un retard par rapport au signal RA d'une durée de 13 bits puis se maintenant à haut niveau pendant une durée de 15 bits. Ainsi, une comparaison entre les signaux CR et SC1 entraîne que l'on a déterminé que la bonne condition était validée à partir du moment où le produit CR par SC1 est égal à 0 (dans la figure 5(c), le signal SC1 est représenté à sa position extrême gauche tandis que RA est à sa position limite gauche ; dans la figure 5(e), le signal SC1 est représenté à sa position extrême droite tandis que RA est à sa position limite droite).

Selon une particularité de la présente invention, on prévoit également, une fois que le signal RA est synchronisé par rapport au signal WA, c'est-à-dire que l'intersection de SC1 et CR a été déterminée comme étant nulle, de produire au lieu du signal SC1 un signal SC2 présentant un retard plus important par rapport au signal RA pour augmenter la plage d'écart autorisée entre WA et RA, c'est-à-dire prendre en compte la gigue une fois synchronisé, cette gigue pouvant changer de signe par rapport à la valeur qu'elle avait à l'instant de la synchronisation et pouvant avoir l'amplitude maximale autorisée. Ce signal SC2 est représenté à titre d'exemple en (d) et (f).

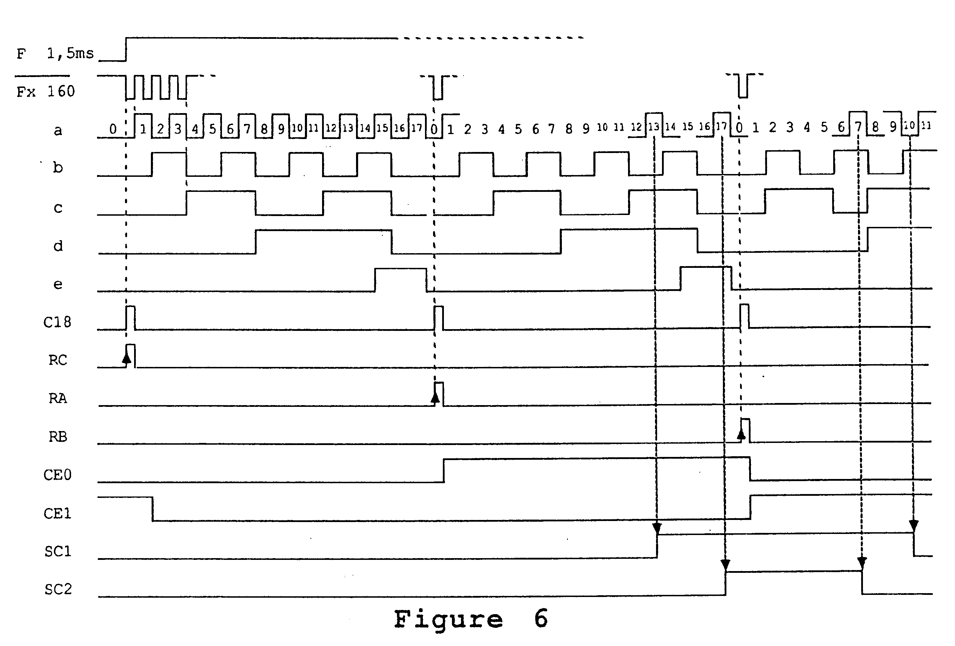

La figure 6 représente un chronogramme plus précis indiquant les sorties du compteur 20 de la figure 4 dans un cas particulier, la sortie globale du compteur étant indiquée sous l'appelation C18.

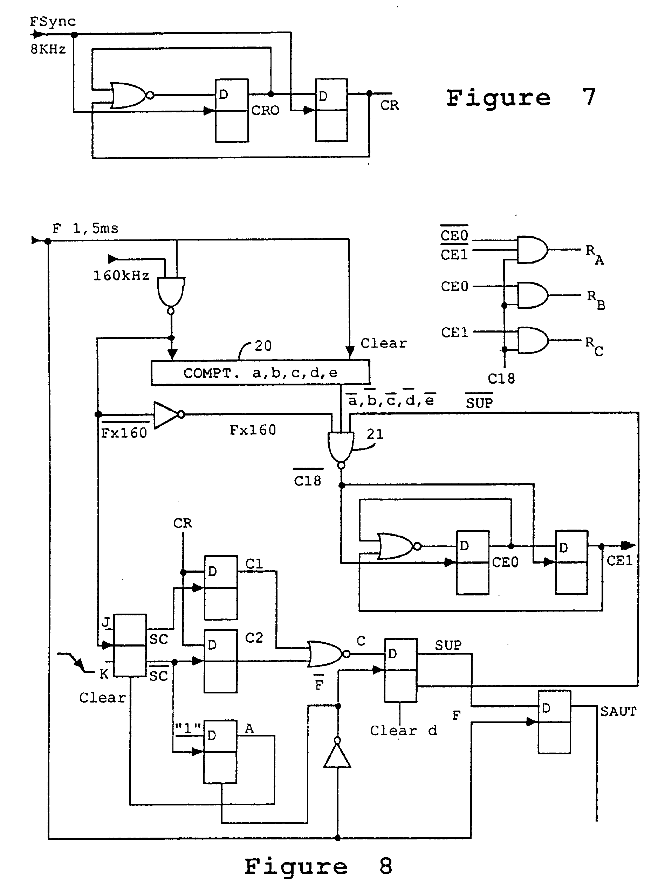

Les figures 7 et 8 représentent des modes de réalisation particuliers des circuits logiques des compteurs de réception et d'émission pour satisfaire aux diverses fonctions énoncées précédemment.

En figure 7, le compteur de réception 10 est réalisé au moyen d'une porte NON ET et de deux bascules de type D permettant de fournir le signal CR ainsi que le signal inverse.

La figure 8 représente un mode de réalisation détaillé des éléments de la figure 4 à l'exception du compteur 10 illustré en figure 7. On retrouve dans cette figure le compteur 20 et les divers signaux illustrés en figure 6 sous les mêmes références. On notera tout particulièrement la sortie marquée "SAUT" du comparateur 18 utilisée de la façon indiquée en figure 4 pour valider la porte 21 (de façon à supprimer une impulsion C18 pour passer en état de synchronisation) et pour permettre de passer du signal SC1 au signal SC2 une fois que l'on est synchronisé.

Un avantage du circuit de synchronisation selon la présente invention est que, alors qu'il a été décrit jusqu'ici comme un moyen pour convertir un premier flux de mots de données fournis au rythme d'une première horloge en un deuxième flux de données comprenant, à l'intérieur de trames successives, une séquence de n mots de données du premier flux et des données d'accompagnement, la durée de chaque trame du deuxième flux étant égale à la durée de n mots de données dans le premier flux, il pourra être utilisé de façon réciproque avec quelques modifications mineures. En d'autres termes, ce circuit qui a été décrit jusqu'ici en mode "émission" pourra également être utilisé en mode "réception". De façon très schématiques les modifications à apporter consisteront, en se référant au schéma sous forme de bloc de la figure 2, à utiliser la sortie du comparateur 18 pour commander le compteur 10 et non plus le compteur 15. C'est donc maintenant le compteur réception et non plus le compteur émission qui est synchronisé.

## Revendications

1. Procédé pour convertir un premier flux de mots de données fournis au rythme d'une première horloge en un deuxième flux de données comprenant, à l'intérieur de trames successives, une séquence de n mots de données du premier flux et des données d'accompagnement, la durée de chaque trame du deuxième flux étant égale à la durée de n mots de données dans le premier flux, comprenant les étapes suivantes :
- mémoriser des mots de données successifs du premier flux dans un registre d'entrée (1),
- dès que le registre est plein, écrire son contenu dans l'un de p registres intermédiaires (A, B, C),
- lire séquentiellement les p registres intermédiaires dans un registre de sortie (5),
- si, au cours d'une trame, la séquence des écritures et des lectures dans les registres intermédiaires est telle qu'un registre intermédiaire est lu alors que son écriture n'a pas été modifiée ou est en cours de modification, sauter, au début de la trame suivante, un ordre de lecture jusqu'à ce qu'on arrive à une synchronisation convenable qui sera ensuite maintenue pendant les trames ultérieures,
caractérisé en ce que, à partir du premier signal de lecture de l'un des registres intermédiaires et du premier signal d'écriture de ce même registre à l'intérieur d'une trame, on détermine, en tenant compte de la durée des données d'accompagnement et d'une gigue éventuelle, la plage dans laquelle doit se trouver ledit signal de lecture par rapport audit signal d'écriture et en ce qu'on construit à partir de ces signaux des signaux décalés (CR et SC1 ou SC2) qui se trouvent en coïncidence ou en anticoïncidence pendant la plage autorisée pour simplifier leur comparaison.

2. Procédé selon la revendication 1, caractérisé en ce que ladite plage est fixée à une première valeur (CR, SC1) pendant la phase de synchronisation et à une deuxième valeur (CR, SC2) plus étendue une fois que la synchronisation a été obtenue.

3. Procédé selon la revendication 2, caractérisé en ce que ladite comparaison est effectuée dans un comparateur (18) qui reçoit un premier signal décalé (CR) associé aux instants de chargement d'un mot entier dans ledit registre d'entrée et un deuxième signal décalé (SC) associé aux instants de lecture du registre de sortie.

4. Procédé selon la revendication 1, dans lequel les registres intermédiaires sont au nombre de trois, caractérisé en ce que :
- le premier signal décalé (CR) associé à l'instant d'écriture (WA) d'un registre (A) est à un premier niveau logique entre les instants d'écriture (WB, WC) des deux autres registres et à un deuxième niveau le reste du temps, et
- le deuxième signal décalé (SC) est au premier niveau logique pendant un intervalle de temps ayant une durée déterminée et présentant un retard déterminé par rapport à l'instant de lecture (RA) dudit registre, cette durée et ce retard étant choisis pour que les premier et second signaux décalés ne soient à aucun moment tous deux à haut niveau quand une relation convenable de synchronisation est atteinte.

5. Procédé selon les revendications 1, 2 et 4, caractérisé en ce que ladite deuxième valeur découle de ladite première valeur du fait que, dès que la phase de synchronisation est achevée, le deuxième signal décalé est transformé (de SC1 à SC2) de sorte que ledit retard est augmenté sensiblement de l'amplitude crête à crête de la gigue et ladite durée est réduite de sensiblement deux fois l'amplitude crête à crête de la gigue.

## Patentansprüche

1. Verfahren zum Umwandeln eines ersten, im Rhythmus eines ersten Taktsignales gelieferten Flusses von Datenworten in einen zweiten Datenfluß, der innerhalb aufeinander folgender Rahmen eine Folge von n Datenworten des ersten Flusses und begleitende Daten enthält, wobei die Dauer jedes Rahmens des zweiten Flusses gleich der Dauer von n Datenworten im ersten Fluß ist, mit folgenden Schritten:
Speichern der aufeinander folgenden Datenworte des ersten Flusses in einem Eingangsspeicher (1),
Einschreiben des Inhalts des Speichers, sobald dieser voll ist, in einen von p Zwischenspeichern (A, B, C),
sequentielles Einlesen der p Zwischenspeicher in einen Ausgangsspeicher (5),
wenn im Verlauf eines Rahmens die Schreib- und Lesefolge in den Zwischenspeichern derart ist, daß ein Zwischenspeicher gelesen wird, während seine eingeschriebenen Daten noch nicht modifiziert sind oder gerade modifiziert werden, Überspringen eines Lesebefehls am Anfang des folgenden Rahmens, bis eine passende Synchronisation erreicht wird, die dann während der letzten Rahmen beibehalten wird,
dadurch gekennzeichnet, daß von dem ersten Lesesignal eines Zwischenspeichers und von dem ersten Schreibsignal des gleichen Speichers innerhalb eines Rahmens, unter Beachtung der Dauer der begleitenden Daten und eventueller Störungen, der Bereich bestimmt wird, in dem sich das erwähnte Lesesignal in bezug zu dem Schreibsignal befinden muß, und daß von diesen Signalen aus verschobene Signale (CR und SC1 oder SC2) gebildet werden, die sich in dem zulässigen Bereich in Koinzidenz oder Antikoinzidenz befinden, um deren Vergleich zu vereinfachen.

2. Verfahren nach Anspruch 1, dadurch gekennzeichnet, daß der Bereich während der Synchronisationsphase auf einen ersten Wert (CR, SC1) und, sobald die Synchronisation erreicht ist, auf einen zweiten, größeren Wert (CR, SC2) festgesetzt wird.

3. Verfahren nach Anspruch 2, dadurch gekennzeichnet, daß der erwähnte Vergleich in einem Komparator (18) durchgeführt wird, der ein erstes verschobenes Signal (CR), das den Zeitpunkten des Ladens eines vollständigen Wortes in den Eingangsspeicher zugeordnet ist, und ein zweites verschobenes Signal (SC) empfängt, das den Zeitpunkten des Lesens des Ausgangsspeichers zugeordnet ist.

4. Verfahren nach Anspruch 1, bei dem drei Zwischenspeicher vorhanden sind, dadurch gekennzeichnet, daß:
das erste, dem Einschreibzeitpunkt (WA) eines Speichers zugeordnete verschobene Signal (CR) zwischen den Einschreibzeitpunkten (WB, WC) der zwei anderen Speicher auf einem ersten logischen Wert und die sonstige Zeit auf einem zweiten Wert ist, und
das zweite verschobene Signal (SC) auf dem ersten logischen Wert während eines Zeitintervalles mit vorbestimmter Dauer ist und eine bestimmte Zeitverzögerung in bezug zu dem Lesezeitpunkt (RA) dieses Speichers einnimmt, wobei die Dauer und die Verzögerung so gewählt sind, daß das erste und zweite verschobene Signal zu keinem Zeitpunkt beide einen hohen Wert haben, wenn eine passende Synchronisationsbeziehung erreicht ist.

5. Verfahren nach den Ansprüchen 1, 2 und 4, dadurch gekennzeichnet, daß der zweite Wert aus dem ersten Wert derart abgeleitet wird, daß, sobald die Synchronisationsphase vollendet ist, das zweite verschobene Signal so transformiert wird (von SC1 nach SC2), daß die Verzögerung im wesentlichen um die Doppelamplitude der Störungen vergrößert und die Dauer um im wesentlichen den zweifachen Wert der Doppelamplitude der Störungen reduziert wird.

## Claims

1. In a process for converting a first flow of data words supplied at the rate of a first clock into a second flow of data words comprising, inside successive frames, a sequence of n data words from the first flow and accompanying data, the duration of each frame of the second flow being equal to the duration of the n data words in the first flow, comprising the following steps:
- storing the successive data words of the first flow in an input register (1);
- as soon as the register is full, writing its contents in one of p intermediate registers (A, B, C),
- sequentially reading the p intermediate registers into an output register (5);
- if, during a frame, the writing and reading sequence in the intermediate registers is such that an intermediate register is read while its writing has not been modified or is being modified, skipping, at the starting of the following frame, a reading order until achievement of a proper synchronization that will then be maintained during the subsequent frames;
the improvement wherein, from the first read signal of one of the intermediate registers and from the first write signal of the same register inside one frame, one determines, taking into account the duration of accompanying data and a possible jitter, the range within which said read signal has to be located with respect to said writing signal and wherein, from those signals, one forms shifted signals (CR and SC1 or SC2) which are in coincidence or in anticoincidence during the authorized range for simplifying their comparison.

2. A process according to claim 1, wherein said range is set to a first value (CR, SC1) during the synchronization phase and to a second more extensive value (CR, SC2) once synchronization has been obtained.

3. A process according to claim 2, wherein said comparison is carried out in a comparator (18) which receives a first shift signal (CR) associated with the loading times of a full word into said input register and a second shifted signal (SC) associated with the read times of the output register.

4. A process according to claim 2, wherein there are three intermediate registers:
- the first shift signal (CR) associated with the writing time (WA) of a register (A) is set to a first logic level between the write times (WB, WC) of the other two registers and to a second level during the remaining part of time, and
- the second shifted signal (SC) is set to a first logic level during a time interval having a determined duration and exhibiting a time delay with respect to the read time (RA) of said register, said duration and said time delay being determined so that the first and second shifted signals are never both set to high level when an adequate synchronization relationship is achieved.

5. A process according to claim 4, wherein said second value is derived from said first value due to the fact that, as soon as the synchronization phase is completed, the second shifted signal is transformed (from SC1 to SC2) so that said time delay is increased substantially by the peak-to-peak amplitude of the jitter and said duration is reduced substantially by twice the peak-to-peak amplitude of the jitter.
